# EUROPEAN PATENT SPECIFICATION

(11) **EP 3 885 564 B1**
(45) Date of publication and mention of the grant of the patent: **28.08.2024**
(21) Application number: 18940815.6
(22) Date of filing: 19.11.2018
(51) Int. Cl.: F02C 7/36, F16H 3/54, F02C 7/32

(54) **ELECTRIC POWER GENERATING APPARATUS FOR USE IN AIRCRAFT**
ERZEUGUNGSVORRICHTUNG FÜR ELEKTRISCHEN STROM FÜR FLUGZEUG
DISPOSITIF DE GÉNÉRATION DE PUISSANCE ÉLECTRIQUE POUR AÉRONEF

(43) Date of publication of application: 29.09.2021
(73) Proprietor: Kawasaki Jukogyo Kabushiki Kaisha, Hyogo 650-8670 (JP)
(72) Inventor: MATSUDA, Kippei, 650-8670 Hyogo (JP); USUKI, Kenji, 650-8670 Hyogo (JP); IMAI, Hideyuki, 650-8670 Hyogo (JP)
(74) Representative: Kleine, Hubertus
(86) International application number: PCT/JP2018/042645
(87) International publication number: WO 2020/105085

(56) References cited:
- EP-A1- 3 321 494
- WO-A1-2008/082335
- WO-A1-2008/082335
- JP-A- 2011 117 437
- JP-A- H0 893 496
- JP-U- S50 129 766
- US-A1- 2006 254 253
- US-A1- 2014 309 077
- US-A1- 2014 309 077
- US-A1- 2018 237 154

## Description

### Technical Field

The present invention relates to an electric power generating apparatus configured to change speed of rotational power of an aircraft engine and transmit the rotational power to an electric power generator.

### Background Art

Many of aircrafts include, as main power supplies, electric power generating apparatuses driven by flight engines. Disclosed as one example of such electric power generating apparatuses is a drive mechanism-integrated electric power generating apparatus (Integrated Drive Generator; IDG). This electric power generating apparatus integrally includes an electric power generator and a continuously variable transmission arranged upstream of the electric power generator as for example shown in document JP 2001-158400.

Documents WO 2008/082335 A1, US 2014/0309077 A1 and EP 3 321 494 A1 each show a power transmission device for a gas turbine engine that uses a planetary gear. A ring gear of the planetary gear can be locked by a brake in order to activate the gear. Document US 2018/0237154 A1 discloses an electric power generating device for an aircraft engine.

### Summary of Invention

### Technical Problem

A case where large rotational frequency fluctuation of power taken out from an engine occurs is assumed, and it is necessary to consider a configuration capable of, even when a rotational frequency fluctuation range of the power becomes large, adjusting a rotational frequency of the power to an appropriate rotational frequency and transmitting the power to the electric power generator. As a countermeasure against this, if a speed change range of a continuously variable transmission of the electric power generating apparatus is made large, the continuously variable transmission needs to be increased in diameter, and the entire apparatus is increased in size, which is not preferable. As a countermeasure which deals with the large rotational frequency fluctuation while preventing the electric power generating apparatus from increasing in size, one idea is that: a small manual transmission (for example, two-stage manual transmission) is provided upstream of the electric power generating apparatus; and the rotational frequency fluctuation range of the power input to the electric power generating apparatus is narrowed by a speed change operation of the manual transmission. However, when the entire apparatus increases in size since the manual transmission is provided, this is the same as a case where the continuously variable transmission is increased in diameter, and therefore, this is meaningless. On this account, the manual transmission is desired to be made compact.

An object of the present invention is to provide an electric power generating apparatus which is compact but includes a manual transmission.

### Solution to Problem

An electric power generating apparatus for use in an aircraft according to one aspect of the present invention is defined in claim 1 and includes: a manual transmission configured to change speed of rotational power of an aircraft engine and including a plurality of gear stages; and an electric power generator to which the rotational power which has been changed in speed by the manual transmission is transmitted. The manual transmission includes a planetary gear mechanism, an input shaft connected to a carrier holding a planetary gear of the planetary gear mechanism, an output shaft connected to a sun gear of the planetary gear mechanism, a one-way clutch which is sandwiched between the input shaft and the output shaft and by which the rotational power of the input shaft is transmitted to the output shaft, and a brake connected to a ring gear of the planetary gear mechanism.

According to the above configuration, when the brake is operated, the ring gear is fixed, and with this, the rotational power transmitted from the input shaft to the output shaft is increased in speed. When the brake becomes the non-operating state, a rotational frequency of the output shaft connected to the load decreases as compared to the rotational frequency of the input shaft. When the rotational frequency of the output shaft becomes equal to the rotational frequency of the input shaft, the one-way clutch becomes the engaged state, and the rotational power of the input shaft is transmitted to the output shaft at equal speed. To be specific, two-stage speed change (equal speed and speed increase) can be realized by switching the operating state of the brake. Then, since the two-stage manual transmission is included in the electric power generating apparatus, the apparatus can be made compact.

The one-way clutch may be arranged at a radially inner side of the ring gear.

The above configuration can contribute to the size reduction of the manual transmission in the axial direction.

The brake may be provided on an outer peripheral surface of the ring gear.

The above configuration can contribute to the size reduction of the manual transmission in the axial direction.

The brake may include a friction clutch and a piston configured to apply press-contact force to the friction clutch. The ring gear may include a ring portion and an internal tooth portion provided on an inner peripheral surface of the ring portion. The planetary gear may be located at a first side of the ring in an axial direction and mesh with the internal tooth portion. A portion of the piston which portion is located at the first side in the axial direction may enter into a radially inner space of the ring portion. Another portion of the piston which portion is located at a second side in the axial direction may be located at the second side of the friction clutch in the axial direction.

The above configuration can contribute to the size reduction of the manual transmission in the axial direction.

According to the present invention, the electric power generating apparatus further includes a continuously variable transmission to which the rotational power from the output shaft of the manual transmission is input and which outputs the rotational power to the electric power generator.

According to the above configuration, an occupied space located upstream of the continuously variable transmission can be suppressed by the size reduction of the manual transmission.

According to the present invention, the continuously variable transmission and the electric power generator are arranged such that an axis of the continuously variable transmission and an axis of the electric power generator are parallel to each other when viewed from at least one direction. When viewed from a direction along the axes, the manual transmission is arranged so as to overlap the continuously variable transmission and the electric power generator.

According to the above configuration, the electric power generating apparatus can be made compact.

The axis of the continuously variable transmission and the axis of the electric power generator may be lined up in a predetermined arrangement direction. An axis of the output shaft of the manual transmission may be located between the axis of the continuously variable transmission and the axis of the electric power generator in the arrangement direction.

According to the above configuration, a power transmission path extending from the manual transmission through the continuously variable transmission to the electric power generator can be made compact.

The axis of the output shaft of the manual transmission may be arranged between the continuously variable transmission and the electric power generator.

According to the above configuration, the power transmission path extending from the manual transmission through the continuously variable transmission to the electric power generator can be made compact.

The electric power generating apparatus may further include an electric power generation controller including a manual transmission control section configured to control the manual transmission. The manual transmission may include a lower stage and an upper stage. When rotational frequency of the aircraft engine is less than a predetermined value, the manual transmission control section may set the manual transmission to the upper stage. When the rotational frequency of the aircraft engine is the predetermined value or more, the manual transmission control section may set the manual transmission to the lower stage. When the brake is in an operating state, the manual transmission may be set to the upper stage. When the brake is in a non-operating state, the manual transmission may be set to the lower stage. The brake may include a preload mechanism configured to bias the brake such that the brake becomes the non-operating state.

According to the above configuration, in the configuration in which: in a high-speed rotation range of the engine, the manual transmission is set to the lower stage (the non-operating state of the brake); and in a low-speed rotation range of the engine, the manual transmission is set to the upper stage (the operating state of the brake), there is included the preload mechanism configured to bias the brake such that the brake becomes the non-operating state. On this account, even if an abnormality occurs in, for example, a driving source used to operate the brake, and therefore, the brake does not operate, the manual transmission is set to the lower stage, and thus, it is possible to prevent a case where the speed of the rotational power output from the manual transmission becomes too high. For example, if the engine reversely rotates by a blast of wind when the engine is in a stop state, the power transmission from the input shaft to the output shaft is cut off by the one-way clutch. Therefore, reverse rotational force is not transmitted to the electric power generator side, and thus, the electric power generator and the like can be suitably protected.

### Advantageous Effects of Invention

The present invention can provide the electric power generating apparatus which is compact but includes the manual transmission.

### Brief Description of Drawings

FIG. 1 is a schematic diagram showing an aircraft engine and an electric power generating apparatus according to an embodiment.
FIG. 2 is a block diagram showing the electric power generating apparatus shown in FIG. 1.
FIG. 3 is a sectional view showing an IDG unit shown in FIG. 2.
FIG. 4 is a diagram when viewed from a direction indicated by an arrow IV of FIG. 3.
FIG. 5 is a diagram showing Modified Example of FIG. 4.
FIG. 6 is a sectional view showing a manual transmission shown in FIG. 3.
FIGS. 7A and 7B are schematic diagrams for explaining an operation principle of the manual transmission shown in FIG. 6.
FIG. 8 is a diagram for explaining a relationship between a speed change position and a rotational frequency of the manual transmission shown in FIG. 6.

### Description of Embodiments

Hereinafter, an embodiment will be described with reference to the drawings.

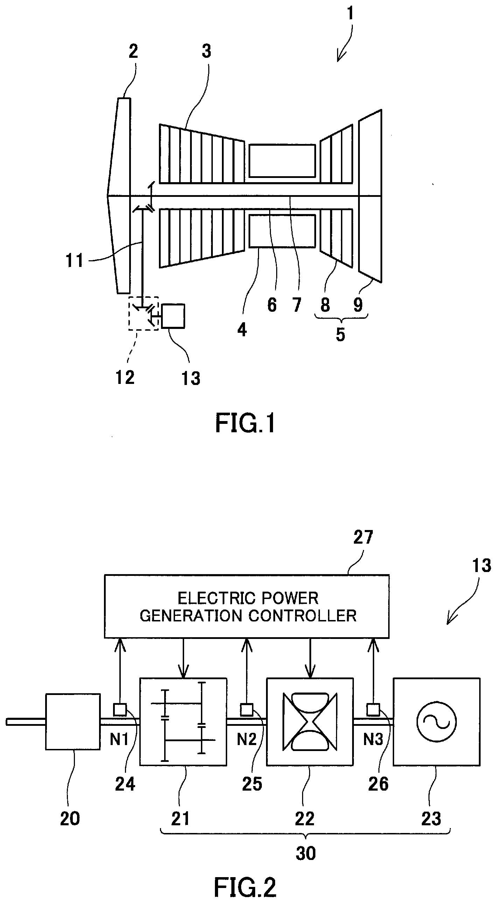

FIG. 1 is a schematic diagram showing an aircraft engine 1 and an electric power generating apparatus 13 according to the embodiment. As shown in FIG. 1, the aircraft engine 1 is a two-shaft gas turbine engine and includes a fan 2, a compressor 3, a combustor 4, a turbine 5, a high-pressure shaft 6, and a low-pressure shaft 7. The fan 2 is arranged at a front portion of the aircraft engine 1 and is surrounded by a fan casing. The turbine 5 includes a high-pressure turbine 8 at a front stage side and a low-pressure turbine 9 at a rear stage side. The high-pressure turbine 8 is coupled to the compressor 3 through the high-pressure shaft 6. The high-pressure shaft 6 is a tubular shaft body including therein a hollow space. The low-pressure turbine 9 is coupled to the fan 2 through the low-pressure shaft 7. The low-pressure shaft 7 is inserted into the hollow space of the high-pressure shaft 6.

A connecting shaft 11 extending outward in a radial direction is connected to the low-pressure shaft 7 such that the low-pressure shaft 7 can transmit power to the connecting shaft 11. A gear box 12 is connected to the connecting shaft 11 such that the connecting shaft 11 can transmit the power to the gear box 12. The electric power generating apparatus 13 is connected to the gear box 12 such that the gear box 12 can transmit the power to the electric power generating apparatus 13. To be specific, rotational power of the low-pressure shaft 7 is transmitted through the connecting shaft 11 and the gear box 12 to the electric power generating apparatus 13. Since rotational frequency fluctuation of the low-pressure shaft 7 is larger than rotational frequency fluctuation of the high-pressure shaft 6, a rotational frequency fluctuation range of the power input to the electric power generating apparatus 13 becomes large. It should be noted that the power to be transmitted to the electric power generating apparatus 13 may be taken out from the high-pressure shaft 6 instead of the low-pressure shaft 7.

FIG. 2 is a block diagram showing the electric power generating apparatus 13 shown in FIG. 1. As shown in FIG. 2, the electric power generating apparatus 13 includes an emergency cut-off device 20 (disconnect assembly), a manual transmission 21, a continuously variable transmission 22, an electric power generator 23, first to third rotational frequency sensors 24 to 26, and an electric power generation controller 27. The rotational power taken out from the low-pressure shaft 7 of the aircraft engine 1 is input to the electric power generator 23 through the emergency cut-off device 20, the manual transmission 21, and the continuously variable transmission 22.

The emergency cut-off device 20 is a power transmission mechanism to which the rotational power taken out from the aircraft engine 1 is input and which can cut off power transmission by a cut-off command from an outside. To be specific, the emergency cut-off device 20 is normally maintained in a power transmitting state and can change from the power transmitting state to a power transmission cut-off state by the operation of a pilot, for example. The emergency cut-off device 20 is arranged upstream of the manual transmission 21. Therefore, when the emergency cut-off device 20 cuts off the power transmission at the time of the occurrence of the abnormality, the power transmission to all of the manual transmission 21, the continuously variable transmission 22, and the electric power generator 23 is cut off. Thus, the entire apparatus is appropriately protected at the time of the occurrence of the abnormality.

The rotational power taken out from the aircraft engine 1 is input to the manual transmission 21 through the emergency cut-off device 20. The manual transmission 21 is a transmission configured to select a gear train, by which the power is transmitted, from a plurality of gear trains and perform speed change. In the present embodiment, as one example, the manual transmission 21 is of a two-stage speed change type and includes a lower stage (equal speed stage) and an upper stage (speed increasing stage) having a larger change gear ratio (smaller reduction ratio) than the lower stage. When performing shift-up from the lower stage to the upper stage or performing shift-down from the upper stage to the lower stage, the manual transmission 21 changes from a state where one gear train is being selected to a state where another gear train is being selected through a disengaged state (neutral state).

The rotational power which has been changed in speed by and output from the manual transmission 21 is input to the continuously variable transmission 22. For example, a toroidal continuously variable transmission can be used as the continuously variable transmission 22. The toroidal continuously variable transmission changes the change gear ratio in such a manner that a power roller sandwiched by input and output discs is tilted by changing the position of the power roller by an actuator. Since the toroidal continuously variable transmission is publicly known, the explanation of a detailed structure thereof is omitted. It should be noted that the continuously variable transmission may be of a different type, and for example, may be a hydraulic transmission (Hydro Static Transmission).

The rotational power which has been changed in speed by and output from the continuously variable transmission 22 is input to the electric power generator 23. The electric power generator 23 is an AC generator. For example, when the power having a constant rotational frequency is input to the electric power generator 23, the electric power generator 3 generates alternating current having a constant frequency. The electric power generated by the electric power generator 23 is supplied to an electrical apparatus (not shown) mounted on the aircraft.

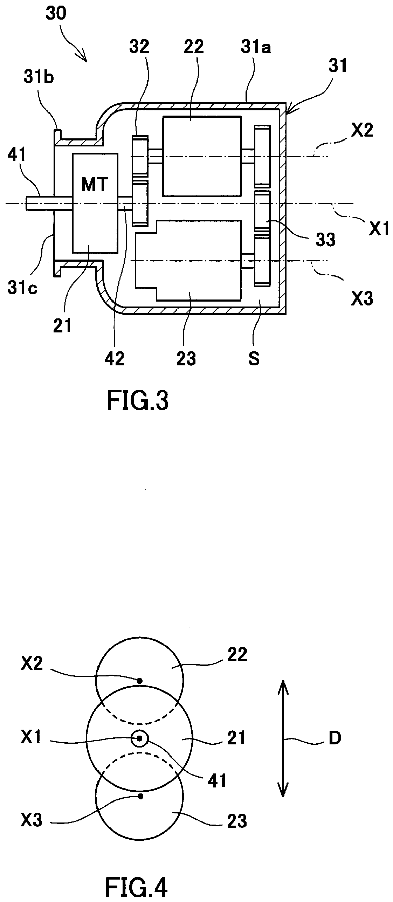

The manual transmission 21, the continuously variable transmission 22, and the electric power generator 23 are integrated with each other as an IDG unit 30. To be specific, the manual transmission 21, the continuously variable transmission 22, and the electric power generator 23 are accommodated in a housing 31 (FIG. 3) as described below. It should be noted that the IDG unit 30 may accommodate the emergency cut-off device 20 in addition to the manual transmission 21, the continuously variable transmission 22, and the electric power generator 23.

The first rotational frequency sensor 24 detects an input rotational frequency N1 of the manual transmission 21. The second rotational frequency sensor 25 detects an output rotational frequency N2 of the manual transmission 21 (i.e., an input rotational frequency of the continuously variable transmission 22). The third rotational frequency sensor 26 detects an output rotational frequency N3 of the continuously variable transmission 22. The electric power generation controller 27 controls a speed change operation of the manual transmission 21 and a speed change operation of the continuously variable transmission 22 in accordance with the rotational frequencies N1, N2, and N3 detected by the first to third rotational frequency sensors 24 to 26.

FIG. 3 is a sectional view showing the IDG unit 30 shown in FIG. 2. FIG. 4 is a diagram when viewed from a direction indicated by an arrow IV shown in FIG. 3. As shown in FIGS. 3 and 4, the IDG unit 30 includes the housing 31 accommodating the manual transmission 21, the continuously variable transmission 22, and the electric power generator 23. To be specific, since the manual transmission 21 is accommodated in the housing 31 accommodating the continuously variable transmission 22 and the electric power generator 23, the apparatus is made compact, and handleability of the apparatus improves. The housing 31 includes a housing main body portion 31a and an attaching portion 31b at which an input opening 31c is formed. The manual transmission 21 is connected to the continuously variable transmission 22 through a power transmission mechanism 32 (for example, a gear train). The continuously variable transmission 22 is connected to the electric power generator 23 through a power transmission mechanism 33 (for example, a gear train).

A power transmission path (continuously variable transmission 22, 23) between the manual transmission 21 and the electric power generator 23 is configured such that: the manual transmission 21, the electric power generator 23, and the electric power generator 23 correspond to each other one-to-one; and the entire rotational power which has been changed in speed by the manual transmission 22 is transmitted through the continuously variable transmission 22 to the electric power generator 23. To be specific, the power transmission mechanisms 32 and 33 are complete in the housing 31 without branching toward components other than the IDG unit 30, and therefore, the IDG unit 30 is compact and high in handleability.

An axis X1 of the manual transmission 21, an axis X2 of the continuously variable transmission 22, and an axis X3 of the electric power generator 23 are parallel to each other. It should be noted that the term "parallel" does not have to denote "completely parallel," and slight misalignment is acceptable. For example, an angle between the axes may be in a range from 10° to -10°. Moreover, in the present embodiment, the axes X1 to X3 are simply parallel to each other. However, the axes X1 to X3 may be set such that: the axes X1 to X3 are skew lines; and when viewed from one direction, the axes X1 to X3 are parallel to each other. For example, the axes X1 to X3 may be set such that: when viewed from a direction perpendicular to the axis X1 and an arrangement direction D in which the continuously variable transmission 22 and the electric power generator 23 are arranged (i.e., from a viewpoint of FIG. 3), the axes X1 to X3 are parallel to each other; and when viewed from the arrangement direction, at least two of the axes X1 to X3 intersect with each other.

The continuously variable transmission 22 and the electric power generator 23 are provided adjacent to each other in a direction perpendicular to the axes X2 and X3. The manual transmission 21 is arranged in an accommodating space S of the housing 31 so as to be located closer to the attaching portion 3 1b than the continuously variable transmission 22 and the electric power generator 23. An input shaft 41 of the manual transmission 21 is inserted into the input opening 31c of the attaching portion 31b and projects to an outside.

When viewed from a direction along the axis X1, the manual transmission 21 is arranged so as to overlap the continuously variable transmission 22 and the electric power generator 23. In the arrangement direction D in which the axis X2 of the continuously variable transmission 22 and the axis X3 of the electric power generator 23 are lined up, the axis X1 of an output shaft 42 of the manual transmission 21 is located between the axis X2 of the continuously variable transmission 22 and the axis X3 of the electric power generator 23. In the present embodiment, when viewed from the direction along the axis X1, the axis X1 of the manual transmission 21 is sandwiched between the continuously variable transmission 22 and the electric power generator 23.

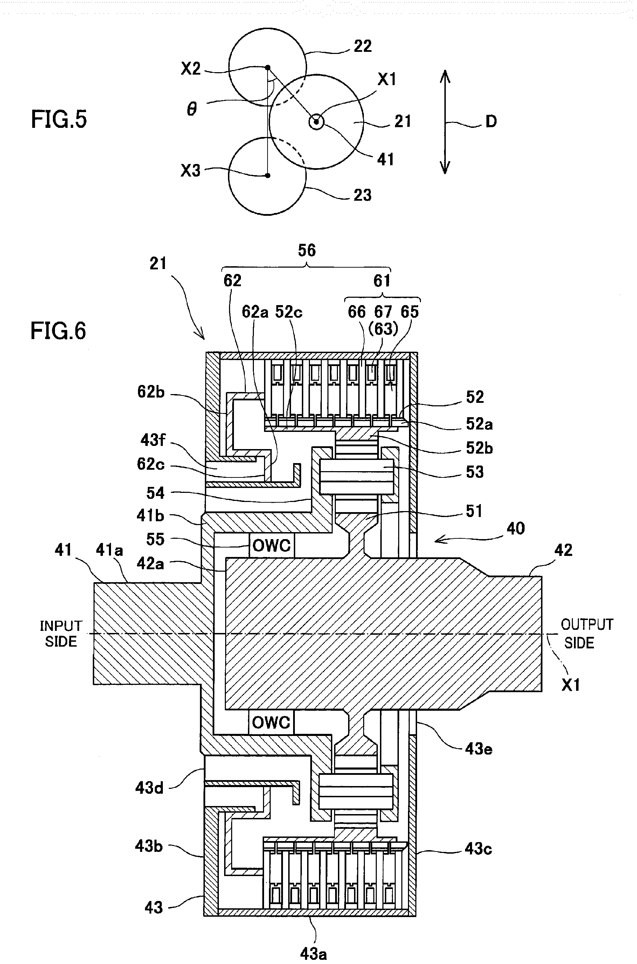

It should be noted that when viewed from the direction along the axis X1, the manual transmission 21, the continuously variable transmission 22, and the electric power generator 23 do not have to be lined up in a row. For example, as shown in FIG. 5, the axes X1 to X3 may be set such that: the axis X1 of the manual transmission 21 is located between the axis X2 of the continuously variable transmission 22 and the axis X3 of the electric power generator 23 in the arrangement direction D; and a line connecting the axis X1 and the axis X2 may form an angle θ with respect to the arrangement direction D, i.e., the angle θ between a line connecting the axis X2 and the axis X3 and the line connecting the axis X1 and the axis X2 is larger than 0° and smaller than 90°.

In the present embodiment, the input shaft 41 and the output shaft 42 of the manual transmission 21 are coaxially arranged. The axis X1 of the input and output shafts 41 and 42 of the manual transmission 21 is arranged between the continuously variable transmission 22 and the electric power generator 23. According to this configuration, a power transmission path extending from the manual transmission 21 through the continuously variable transmission 22 to the electric power generator 23 is made compact.

The attaching portion 31b is smaller in diameter than the housing main body portion 31a. The continuously variable transmission 22 and the electric power generator 23 are accommodated in the housing main body portion 31a, and the manual transmission 21 is supported by the attaching portion 31b by being fitted to an inner peripheral surface of the attaching portion 31b. To be specific, since the attaching portion 31b of the housing 31 can be utilized as a support structure for the manual transmission 21, the support structure for the manual transmission 21 is simplified. Moreover, since an inner peripheral space of the attaching portion 31b is utilized as an accommodating space accommodating the manual transmission 21, the IDG unit 30 is made compact by effective utilization of the space. Furthermore, since the manual transmission 21 is provided at the inner peripheral surface of the attaching portion 31b of the housing 31, the attaching portion 31b is relatively large in diameter, and attachment stability of the housing 31 improves.

FIG. 6 is a sectional view showing the manual transmission 21 shown in FIG. 3. As shown in FIG. 6, the manual transmission 21 includes a planetary gear mechanism 40, the input shaft 41, the output shaft 42, and a casing 43. The casing 43 includes a cylindrical portion 43a, an annular first closing plate portion 43b configured to close a first opening of the cylindrical portion 43a, and an annular second closing plate portion 43c configured to close a second opening of the cylindrical portion 43a. The planetary gear mechanism 40 is accommodated in a disc-shaped internal space formed by the cylindrical portion 43a, the first closing plate portion 43b, and the second closing plate portion 43c. The input shaft 41 is inserted into a middle hole 43d of the first closing plate portion 43b, and the output shaft 42 is inserted into a middle hole 43e of the second closing plate portion 43c.

The planetary gear mechanism 40 includes a sun gear 51, a ring gear 52, a planetary gear 53, a carrier 54, a one-way clutch 55, and a brake 56. The input shaft 41 is connected to the carrier 54 holding the planetary gear 53 of the planetary gear mechanism 40. The output shaft 42 is connected to the sun gear 51 of the planetary gear mechanism 40. The brake 56 supported by the casing 43 is connected to the ring gear 52.

The input shaft 41 includes a first shaft portion 41a and a second shaft portion 41b that is larger in diameter than the first shaft portion 41a. The first shaft portion 41a projects from the casing 43 to an input side. The second shaft portion 41b is accommodated in the casing 43 and connected to the carrier 54. The input shaft 43 is rotatably supported by the casing 43 through a bearing (not shown). The second shaft portion 41b is tubular and includes an internal space that is open toward the output shaft 42. It should be noted that in FIG. 6, the carrier 54 is formed integrally with the input shaft 41, but the carrier 54 may be formed separately from the input shaft 41 and may be fixed to the input shaft 41.

The output shaft 42 includes a tip end portion 42a inserted into the internal space of the tubular second shaft portion 41b. The tip end portion 42a of the output shaft 42 is supported by the second shaft portion 41b of the input shaft 41 through a bearing (not shown) such that the output shaft 42 is rotatable. The sun gear 51 is connected to a portion of the output shaft 42 which portion is located at an output side of the tip end portion 42a (i.e., located downstream of the tip end portion 42a). The output shaft 42 is rotatably supported by the casing 43 through a bearing (not shown) and is rotatable relative to the input shaft 43. It should be noted that in FIG. 6, the sun gear 51 is formed integrally with the output shaft 42, but the sun gear 51 may be formed separately from the output shaft 42 and may be fixed to the output shaft 42.

The one-way clutch 55 is sandwiched between the input shaft 41 and the output shaft 42. Specifically, the one-way clutch 55 is annular and is sandwiched between an inner peripheral surface of the second shaft portion 41b of the input shaft 41 and an outer peripheral surface of the tip end portion 42a of the output shaft 42. The one-way clutch 55 transmits power only in one rotational direction and does not transmit the power in an opposite rotational direction. The one-way clutch 55 transmits rotational power from the input shaft 41 to the output shaft 42 but does not transmit the rotational power from the output shaft 42 to the input shaft 41. For example, the one-way clutch 55 is of a known sprag type. The one-way clutch 55 is arranged at a radially inner side of the ring gear 52.

The ring gear 52 includes a ring portion 52a and an internal tooth portion 52b projecting inward in a radial direction from an inner peripheral surface of the ring portion 52a. The internal tooth portion 52b is provided at a portion of the inner peripheral surface of the ring portion 52a which portion is located at one side in the direction along the axis X1, i.e., located at the output side. To be specific, the ring portion 52a includes an extended portion 52c which projects from the internal tooth portion 52b to the input side more than to the output side. It should be noted that the internal tooth portion 52b may be provided at the entire inner peripheral surface of the ring portion 52a, and the planetary gear 53 may be located at one side (i.e., the output side) of the ring portion 52a in the direction along the axis X1 and mesh with the internal tooth portion 52b.

The position of the second shaft portion 41b of the input shaft 41 overlap the position of the ring gear 52 in the direction along the axis X1. The position of the one-way clutch 55 also overlap the position of the ring gear 52 in the direction along the axis X1. In the example of FIG. 6, the position of the second shaft portion 41b of the input shaft 41 and the position of the one-way clutch 55 overlap the position of the extended portion 52c of the ring gear 52 in the direction along the axis X1. It should be noted that the present embodiment is not necessarily limited to this positional relation if the requirement of design regarding the axial dimension of the manual transmission 21 permits.

The brake 56 is connected to an outer peripheral surface of the ring gear 52 while being supported by the casing 43. The brake 56 operates between an operating state in which the ring gear 52 is fixed to the casing 43 and a non-operating state in which the ring gear 52 is rotatable relative to the casing 43. Specifically, the brake 56 includes a friction clutch 61, a piston 62 configured to apply press-contact force to the friction clutch 61, and a preload mechanism 63 configured to bias the friction clutch 61 in such a direction that the friction clutch 61 becomes a disengaged state. It should be noted that the brake 56 may include a component other than the friction clutch as long as the brake 56 can realize a state where the ring gear 52 is unrotatable relative to the casing 43 and a state where the ring gear 52 is rotatable relative to the casing 43.

The friction clutch 61 is interposed between an inner peripheral surface of the cylindrical portion 43a of the casing 43 and an outer peripheral surface of the ring portion 52a of the ring gear 52. The friction clutch 61 is, for example, a multiple disc clutch. Specifically, the friction clutch 61 includes a friction plate 65, a mating plate 66, and a wave spring 67. The friction plate 65 is connected to the ring portion 52a of the ring gear 52 so as to be unrotatable relative to the ring portion 52a of the ring gear 52 and movable relative to the ring portion 52a of the ring gear 52 in the direction along the axis X1. The mating plate 66 is connected to the cylindrical portion 43a of the casing 43 so as to be unrotatable relative to the cylindrical portion 43a of the casing 43 and movable relative to the cylindrical portion 43a of the casing 43 in the direction along the axis X1. The wave spring 67 is sandwiched between the friction plate 65 and the mating plate 66.

The wave spring 67 is a preload spring configured to generate biasing force in such a direction that the friction plate 65 and the mating plate 66 separate from each other. To be specific, the wave spring 67 serves as the preload mechanism 63. It should be noted that the preload mechanism 63 may be a preload spring interposed between the piston 62 and the casing 43 so as to bias the piston 62 in such a direction that the friction clutch 61 becomes the disengaged state.

The position of the friction clutch 61 overlap the position of the sun gear 51 and the position of the planetary gear 53 in the direction along the axis X1. It should be noted that the present embodiment is not limited to this positional relation if the requirement of design regarding the axial dimension of the manual transmission 21 permits.

The piston 62 is arranged between the second shaft portion 41b of the input shaft 41 and the ring gear 52 in the radial direction. The position of the piston 62 overlaps the position of the planetary gear 53 in the radial direction. The piston 62 includes: a first end portion 62a located at the output side in the direction along the axis X1; and a second end portion 62b located at the input side in the direction along the axis X1. An operation trajectory (operating range) of the piston 62 is arranged so as to enter into a radially inner space of the extended portion 52c of the ring portion 52a. To be specific, the first end portion 62a of the piston 62 may enter into the radially inner space of the extended portion 52c of the ring portion 52a.

The second end portion 62b of the piston 62 is located at the input side of the friction clutch 61 in the direction along the axis X1. A pressure receiving surface 62c facing the input side in the direction along the axis X1 is formed at an intermediate portion between the first end portion 62a and the second end portion 62b in the piston 62. The pressure receiving surface 62c is located at the output side of an end surface of the piston 62 in the direction along the axis X1, the end surface being located at the input side in the direction along the axis X1. It should be noted that the present embodiment is not limited to this positional relation if the requirement of design regarding the axial dimension of the manual transmission 21 permits. For example, the piston may be simply opposed to the friction clutch 61.

The piston 62 is slidably supported by the casing 43. The second end portion 62b of the piston 62 is arranged at a radially outer side of the first end portion 62a and the pressure receiving surface 62c of the piston 62. A hydraulic pressure passage 43f that is open toward the pressure receiving surface 62c of the piston 62 is formed at the first closing plate portion 43b of the casing 43. Pressure oil is supplied to the hydraulic pressure passage 43f by a hydraulic pump (not shown) driven by the power of the aircraft engine 1.

Since the pressure oil supplied from the hydraulic pressure passage 43f pushes the pressure receiving surface 62c, the piston 62 is driven toward the output side in the direction along the axis X1. The friction clutch 61 is pressed by the second end portion 62b of the driven piston 62 to become the engaged state (the operating state of the brake 56). When the hydraulic pressure applied from the hydraulic circuit 43f to the pressure receiving surface 62c decreases, and the piston 62 retreats, the friction clutch 61 becomes a disengaged state (the non-operating state of the brake 56).

According to the above configuration, the manual transmission 21 can be formed in a thin shape that is compact in the direction along the axis X1. Therefore, an occupied space located upstream of the continuously variable transmission 22 in the IDG unit 30 is suppressed. Moreover, since the manual transmission 21 is of a thin type, the manual transmission 21b is stably supported by the attaching portion 31b while being accommodated in the inner peripheral space of the attaching portion 3 1b of the IDG unit 30.

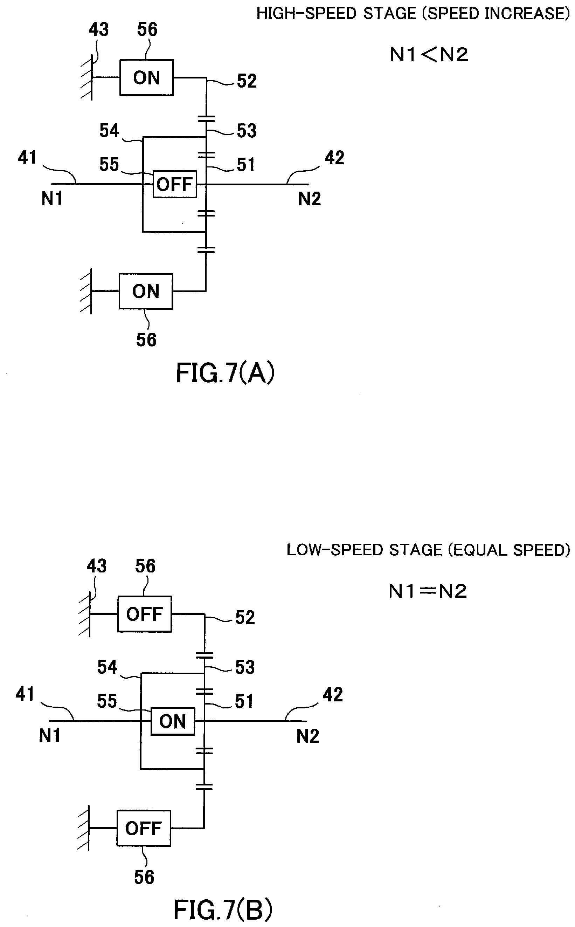

FIGS. 7A and 7B are schematic diagrams for explaining an operation principle of the manual transmission 21 shown in FIG. 6. As shown in FIG. 7A, in the manual transmission 21, when the brake 56 becomes the operating state, the ring gear 52 is fixed to the casing 43, and the rotational power of the input shaft 41 is transmitted to the output shaft 42 through the carrier 54, the planetary gear 53, and the sun gear 51. Thus, speed increase is performed (N1 < N2). On the other hand, as shown in FIG. 7B, in the manual transmission 21, when the brake 56 becomes the non-operating state, the ring gear 52 is rotatable relative to the casing 43, and the rotational power of the input shaft 41 is transmitted to the output shaft 42 through the one-way clutch 55 at equal speed (N1 = N2).

To be specific, when the brake 56 becomes the operating state, the manual transmission 21 is set to a high-speed stage (speed increase) that is the upper stage. When the brake 56 becomes the non-operating state, the manual transmission 21 is set to a low-speed stage (equal speed) that is the lower stage. However, the present embodiment is not limited to this as long as the upper stage is larger in a speed increasing ratio (smaller in the reduction ratio) than the lower stage. For example, the combination of two gear stages (the high-speed stage and the low-speed stage) of the manual transmission 21 does not have to be the combination of the speed increasing stage and the equal speed stage and may be, for example, the combination of the speed increasing stage and a speed decreasing stage or the combination of the equal speed stage and the speed decreasing stage.

According to this configuration, when the brake 56 changes from the operating state to the non-operating state, the rotational frequency of the output shaft 42 connected to the load (electric power generator 23) decreases as compared to the rotational frequency of the input shaft 41. When the rotational frequency of the output shaft 42 becomes equal to the rotational frequency of the input shaft 41, the one-way clutch 55 becomes an engaged state, and the rotational power of the input shaft 41 is transmitted to the output shaft 42 at equal speed. To be specific, two-stage speed change (equal speed and speed increase) can be realized by switching the operating state of the brake 56. Then, since the two-stage manual transmission 21 is included in the electric power generating apparatus 13, the apparatus can be made compact.

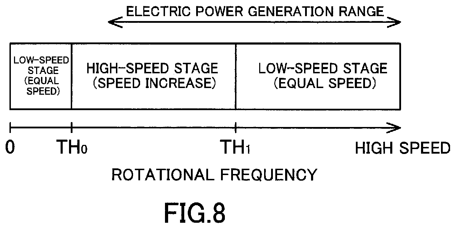

FIG. 8 is a diagram for explaining a relationship between a speed change position and the rotational frequency of the manual transmission 21 shown in FIG. 6. As shown in FIG. 8, when starting up the aircraft engine 1 from a stop state, the electric power generation controller 27 (FIG. 2) does not operate the piston 62 (FIG. 6) of the brake 56 until the hydraulic pressure capable of operating the piston 62 can be realized. Therefore, the brake 56 is maintained in the non-operating state by the preload mechanism 63, and the manual transmission 21 is maintained at the low-speed stage (equal speed). Then, when the hydraulic pressure of a hydraulic pressure passage 43g (FIG. 2) exceeds a predetermined value, the electric power generation controller 27 operates the piston 62 to set the brake 56 to the operating state and sets the manual transmission 21 to the high-speed stage (FIG. 7A). Then, when the aircraft engine 1 exceeds an idling rotational frequency, the electric power generation by the electric power generator 23 is started.

While the rotational frequency of the aircraft engine 1 is less than a predetermined value (for example, until the rotational frequency of the input shaft 41 detected by the first rotational frequency sensor 24 becomes a predetermined threshold TH₁ or more), the brake 56 is set to the operating state such that the manual transmission 21 is maintained at the high-speed stage. When the rotational frequency of the aircraft engine 1 becomes a predetermined value or more (for example, when the rotational frequency of the input shaft 41 detected by the first rotational frequency sensor 24 becomes the predetermined threshold TH₁ or more), the brake 56 is set to the non-operating state such that the manual transmission 21 is set to the low-speed stage (FIG. 7B).

As above, in the configuration in which: in a high-speed rotation range of the aircraft engine 1, the manual transmission 21 is set to the low-speed stage (the brake 56 becomes the non-operating state); and in a low-speed rotation range of the aircraft engine 1, the manual transmission 21 is set to the high-speed stage (the brake 56 becomes the operating state), there is included the preload mechanism 63 configured to bias the brake 56 such that the brake 56 becomes the non-operating state. On this account, even if an abnormality occurs in, for example, a driving source used to operate the brake 56, and therefore, the brake 56 does not operate, the manual transmission 21 is set to the low-speed stage, and thus, it is possible to prevent a case where the speed of the rotational power output from the manual transmission 21 becomes too high. If a blast of wind acts on the fan 2, for example, in the stop state of the aircraft engine 1, and the aircraft engine 1 reversely rotates, the power transmission from the input shaft 41 to the output shaft 42 is cut off by the one-way clutch 55 (FIG. 6). Therefore, reverse rotational force is not transmitted to the electric power generator 23 side, and thus, the electric power generator 23 and the like can be suitably protected.

### Reference Signs List

- 1: aircraft engine
- 13: electric power generating apparatus
- 20: emergency cut-off device
- 21: manual transmission
- 22: continuously variable transmission
- 23: electric power generator
- 27: electric power generation controller
- 30: IDG unit
- 31: housing
- 31b: attaching portion
- 31c: input opening
- 40: planetary gear mechanism
- 41: input shaft
- 42: output shaft
- 43: casing
- 51: sun gear
- 52: ring gear
- 52a: ring portion
- 52b: internal tooth portion
- 52c: extended portion
- 53: planetary gear
- 54: carrier
- 55: one-way clutch
- 56: brake
- 61: friction clutch
- 62: piston
- 63: preload mechanism

## Claims

1. An electric power generating apparatus (13) for use in an aircraft,
the electric power generating apparatus (13) comprising:
a manual transmission (21) configured to change speed of rotational power of an aircraft engine (1) and including a plurality of gear stages; and
an electric power generator (23) to which the rotational power which has been changed in speed by the manual transmission (21) is transmitted, wherein
the manual transmission (21) includes
a planetary gear mechanism (40),
an input shaft (41) connected to a carrier (54) holding a planetary gear (53) of the planetary gear mechanism (40),
an output shaft (42) connected to a sun gear (51) of the planetary gear mechanism (40), and
a brake (56) connected to a ring gear (52) of the planetary gear mechanism (40),
**characterized in that**:
the electric power generating apparatus (13) further comprises a continuously variable transmission (22) to which the rotational power from the output shaft (42) of the manual transmission (21) is input and which outputs the rotational power to the electric power generator (23),
the manual transmission (21) further includes a one-way clutch (55) which is sandwiched between the input shaft (41) and the output shaft (42) and by which the rotational power of the input shaft (41) is transmitted to the output shaft (42),
the continuously variable transmission (22) and the electric power generator (23) are arranged such that an axis (X2) of the continuously variable transmission (22) and an axis (X3) of the electric power generator (23) are parallel to each other when viewed from at least one direction; and
when viewed from a direction along the axes (X2, X3), the manual transmission (21) is arranged so as to overlap the continuously variable transmission (22) and the electric power generator (23).

2. The electric power generating apparatus (13) according to claim 1, wherein the one-way clutch (55) is arranged at a radially inner side of the ring gear (52).

3. The electric power generating apparatus (13) according to claim 1 or 2, wherein the brake (56) is provided on an outer peripheral surface of the ring gear (52).

4. The electric power generating apparatus (13) according to claim 3, wherein:
the brake (56) includes a friction clutch (61) and a piston (62) configured to apply press-contact force to the friction clutch (61);
the ring gear (52) includes a ring portion (52a) and an internal tooth portion (52b) provided on an inner peripheral surface of the ring portion (52a);
the planetary gear (53) is located at a first side of the ring portion (52a) in an axial direction and meshes with the internal tooth portion (52b);
a portion of the piston (62) which portion is located at the first side in the axial direction enters into a radially inner space of the ring portion (52a); and
another portion of the piston (62) which portion is located at a second side in the axial direction is located at the second side of the friction clutch (61) in the axial direction.

5. The electric power generating apparatus (13) according to any one of claims 1 to 4, wherein:
the axis (X2) of the continuously variable transmission (22) and the axis (X3) of the electric power generator (23) are lined up in a predetermined arrangement direction (D); and
an axis (X1) of the output shaft (42) of the manual transmission (21) is located between the axis (X2) of the continuously variable transmission (22) and the axis (X3) of the electric power generator (23) in the arrangement direction (D).

6. The electric power generating apparatus (13) according to claim 5, wherein the axis of the output shaft of the manual transmission is arranged between the continuously variable transmission and the electric power generator.

7. The electric power generating apparatus (13) according to any one of claims 1 to 6, further comprising an electric power generation controller including a manual transmission control section configured to control the manual transmission, wherein:
the manual transmission includes a lower stage and an upper stage;
when a rotational frequency of the aircraft engine is less than a predetermined value, the manual transmission control section sets the manual transmission to the upper stage;
when the rotational frequency of the aircraft engine is the predetermined value or more, the manual transmission control section sets the manual transmission to the lower stage;
when the brake is in an operating state, the manual transmission is set to the upper stage;
when the brake is in a non-operating state, the manual transmission is set to the lower stage; and
the brake includes a preload mechanism configured to bias the brake such that the brake becomes the non-operating state.

## Patentansprüche

1. Einrichtung (13) zum Erzeugen elektrischer Leistung zur Verwendung in einem Luftfahrzeug, wobei die Einrichtung (13) zum Erzeugen elektrischer Leistung Folgendes umfasst:
ein Handschaltgetriebe (21), das dazu konfiguriert ist, eine Geschwindigkeit einer Drehleistung eines Luftfahrzeugtriebwerks (1) zu ändern, und eine Vielzahl von Getriebestufen beinhaltet; und
einen Erzeuger (23) elektrischer Leistung, an den die Drehleistung übertragen wird, die durch das Handschaltgetriebe (21) in Geschwindigkeit geändert wurde, wobei das Handschaltgetriebe (21) Folgendes beinhaltet:
einen Planetenradmechanismus (40),
eine Eingangswelle (41), die mit einem Träger (54), der ein Planetenrad (53) des Planetenradmechanismus (40) hält, verbunden ist,
eine Ausgangswelle (42), die mit einem Sonnenrad (51) des Planetenradmechanismus (40) verbunden ist, und
eine Bremse (56), die mit einem Hohlrad (52) des Planetenradmechanismus (40) verbunden ist,
**dadurch gekennzeichnet, dass**:
die Einrichtung (13) zum Erzeugen elektrischer Leistung ferner ein stufenloses Getriebe (22) umfasst, in das die Drehleistung von der Ausgangswelle (42) des Handschaltgetriebes (21) eingegeben wird und das die Drehleistung an den Erzeuger (23) elektrischer Leistung ausgibt,
das Handschaltgetriebe (21) ferner eine Einwegkupplung (55) beinhaltet, die zwischen der Eingangswelle (41) und der Ausgangswelle (42) aufgenommen ist und durch welche die Drehleistung der Eingangswelle (41) an die Ausgangswelle (42) übertragen wird,
das stufenlose Getriebe (22) und der Erzeuger (23) elektrischer Leistung angeordnet sind, so dass eine Achse (X2) des stufenlosen Getriebes (22) und eine Achse (X3) des Erzeugers (23) elektrischer Leistung aus mindestens einer Richtung gesehen parallel zueinander sind; und
das Handschaltgetriebe (21) aus einer Richtung entlang der Achsen (X2, X3) gesehen so angeordnet ist, um das stufenlose Getriebe (22) und den Erzeuger (23) elektrischer Leistung zu überlappen.

2. Einrichtung (13) zum Erzeugen elektrischer Leistung nach Anspruch 1, wobei die Einwegkupplung (55) an einer radial inneren Seite des Hohlrads (52) angeordnet ist.

3. Einrichtung (13) zum Erzeugen elektrischer Leistung nach Anspruch 1 oder 2, wobei die Bremse (56) an einer äußeren Umfangsfläche des Hohlrads (52) bereitgestellt ist.

4. Einrichtung (13) zum Erzeugen elektrischer Leistung nach Anspruch 3, wobei:
die Bremse (56) eine Reibungskupplung (61) und einen Kolben (62), der dazu konfiguriert ist, eine Druckkontaktkraft auf die Reibungskupplung (61) auszuüben, beinhaltet;
das Hohlrad (52) einen Ringabschnitt (52a) und einen Innenzahnabschnitt (52b), der an einer inneren Umfangsfläche des Ringabschnitts (52a) bereitgestellt ist, beinhaltet;
sich das Planetenrad (53) auf einer ersten Seite des Ringabschnitts (52a) in einer axialen Richtung befindet und in den Innenzahnabschnitt (52b) greift;
ein Abschnitt des Kolbens (62), wobei sich der Abschnitt auf der ersten Seite in der axialen Richtung befindet, in einen radial inneren Raum des Ringabschnitts (52a) eintritt; und
sich ein anderer Abschnitt des Kolbens (62), wobei sich der Abschnitt auf einer zweiten Seite in der axialen Richtung befindet, auf der zweiten Seite der Reibungskupplung (61) in der axialen Richtung befindet.

5. Einrichtung (13) zum Erzeugen elektrischer Leistung nach einem der Ansprüche 1 bis 4, wobei:
die Achse (X2) des stufenlosen Getriebes (22) und die Achse (X3) des Erzeugers (23) elektrischer Leistung in einer vorbestimmten Anordnungsrichtung (D) aufgereiht sind; und
sich eine Achse (X1) der Ausgangswelle (42) des Handschaltgetriebes (21) zwischen der Achse (X2) des stufenlosen Getriebes (22) und der Achse (X3) des Erzeugers (23) elektrischer Leistung in der Anordnungsrichtung (D) befindet.

6. Einrichtung (13) zum Erzeugen elektrischer Leistung nach Anspruch 5, wobei die Achse der Ausgangswelle des Handschaltgetriebes zwischen dem stufenlosen Getriebe und dem Erzeuger elektrischer Leistung angeordnet ist.

7. Einrichtung (13) zum Erzeugen elektrischer Leistung nach einem der Ansprüche 1 bis 6, ferner umfassend eine Steuerung zur Erzeugung elektrischer Leistung, die einen Handschaltgetriebesteuerungsbereich beinhaltet, der dazu konfiguriert ist, das Handschaltgetriebe zu steuern, wobei:
das Handschaltgetriebe eine untere Stufe und eine obere Stufe beinhaltet;
wenn eine Drehfrequenz des Luftfahrzeugtriebwerks kleiner als ein vorbestimmter Wert ist, der Handschaltgetriebesteuerungsbereich das Handschaltgetriebe auf die obere Stufe einstellt;
wenn die Drehfrequenz des Luftfahrzeugtriebwerks den vorbestimmten Wert oder mehr beträgt, der Handschaltgetriebesteuerungsbereich das Handschaltgetriebe auf die untere Stufe einstellt;
wenn sich die Bremse in einem Betriebszustand befindet, das Handschaltgetriebe auf die obere Stufe eingestellt wird;
wenn sich die Bremse in einem Nichtbetriebszustand befindet, das Handschaltgetriebe auf die untere Stufe eingestellt wird; und
die Bremse einen Vorspannmechanismus beinhaltet, der dazu konfiguriert ist, die Bremse vorzuspannen, so dass die Bremse in den Nichtbetriebszustand übergeht.

## Revendications

1. Appareil de génération de puissance électrique (13) destiné à être utilisé dans un aéronef,
l'appareil de génération de puissance électrique (13) comprenant :
une transmission manuelle (21) configurée pour changer la vitesse d'une puissance de rotation d'un moteur d'aéronef (1) et incluant une pluralité d'étages d'engrenage ; et
un générateur de puissance électrique (23) auquel est transmise la puissance de rotation dont la vitesse a été changée par la transmission manuelle (21) ; dans lequel
la transmission manuelle (21) inclut
un mécanisme de train épicycloïdal (40),
un arbre d'entrée (41) raccordé à un porte-satellite (54) maintenant un satellite (53) du mécanisme de train épicycloïdal (40),
un arbre de sortie (42) raccordé à un planétaire (51) du mécanisme de train épicycloïdal (40), et
un frein (56) raccordé à une couronne dentée (52) du mécanisme de train épicycloïdal (40),
**caractérisé en ce que** :
l'appareil de génération de puissance électrique (13) comprend en outre une transmission à variation continue (22) à laquelle la puissance de rotation provenant de l'arbre de sortie (42) de la transmission manuelle (21) est délivrée en entrée et qui délivre en sortie la puissance de rotation au générateur de puissance électrique (23),
la transmission manuelle (21) inclut en outre un embrayage unidirectionnel (55) qui est pris en sandwich entre l'arbre d'entrée (41) et l'arbre de sortie (42) et par lequel la puissance de rotation de l'arbre d'entrée (41) est transmise à l'arbre de sortie (42),
la transmission à variation continue (22) et le générateur de puissance électrique (23) sont agencés de telle sorte qu'un axe (X2) de la transmission à variation continue (22) et un axe (X3) du générateur de puissance électrique (23) sont parallèles l'un à l'autre lorsqu'ils sont vus dans au moins une direction ; et
lorsqu'elle est vue à partir d'une direction le long des axes (X2, X3), la transmission manuelle (21) est agencée de façon à chevaucher la transmission à variation continue (22) et le générateur de puissance électrique (23).

2. Appareil de génération de puissance électrique (13) selon la revendication 1, dans lequel l'embrayage unidirectionnel (55) est agencé au niveau d'un côté radialement interne de la couronne dentée (52).

3. Appareil de génération de puissance électrique (13) selon la revendication 1 ou 2, dans lequel le frein (56) est fourni sur une surface périphérique externe de la couronne dentée (52).

4. Appareil de génération de puissance électrique (13) selon la revendication 3, dans lequel :
le frein (56) inclut un embrayage à friction (61) et un piston (62) configuré pour appliquer une force de contact par pression à l'embrayage à friction (61) ;
la couronne dentée (52) inclut une portion de couronne (52a) et une portion de dent intérieure (52b) fournie sur une surface périphérique interne de la portion de couronne (52a) ;
le satellite (53) est situé d'un premier côté de la portion de couronne (52a) dans une direction axiale et s'engrène avec la portion de dent intérieure (52b) ;
une portion du piston (62), laquelle portion est située du premier côté dans la direction axiale, pénètre dans un espace radialement interne de la portion de couronne (52a) ; et
une autre portion du piston (62), laquelle portion est située d'un second côté dans la direction axiale, est située du second côté de l'embrayage à friction (61) dans la direction axiale.

5. Appareil de génération de puissance électrique (13) selon l'une quelconque des revendications 1 à 4, dans lequel :
l'axe (X2) de la transmission à variation continue (22) et l'axe (X3) du générateur de puissance électrique (23) sont alignés dans une direction d'agencement (D) prédéterminée ; et
un axe (X1) de l'arbre de sortie (42) de la transmission manuelle (21) est situé entre l'axe (X2) de la transmission à variation continue (22) et l'axe (X3) du générateur de puissance électrique (23) dans la direction d'agencement (D).

6. Appareil de génération de puissance électrique (13) selon la revendication 5, dans lequel l'axe de l'arbre de sortie de la transmission manuelle est agencé entre la transmission à variation continue et le générateur de puissance électrique.

7. Appareil de génération de puissance électrique (13) selon l'une quelconque des revendications 1 à 6, comprenant en outre un contrôleur de génération de puissance électrique incluant une section de contrôle de transmission manuelle configurée pour contrôler la transmission manuelle, dans lequel :
la transmission manuelle inclut un étage inférieur et un étage supérieur ;
lorsqu'une fréquence de rotation du moteur d'aéronef est inférieure à une valeur prédéterminée, la section de contrôle de transmission manuelle fixe la transmission manuelle à l'étage supérieur ;
lorsque la fréquence de rotation du moteur d'aéronef est égale ou supérieure à la valeur prédéterminée, la section de contrôle de transmission manuelle fixe la transmission manuelle à l'étage inférieur ;
lorsque le frein est dans un état d'actionnement, la transmission manuelle est fixée à l'étage supérieur ;
lorsque le frein est dans un état de non-actionnement, la transmission manuelle est fixée à l'étage inférieur ; et
le frein inclut un mécanisme de précontrainte configuré pour solliciter le frein de telle sorte que le frein convient à l'état de non-actionnement.
